# EUROPEAN PATENT APPLICATION

(11) **EP 4 589 769 A1**
(43) Date of publication of application: **23.07.2025**
(21) Application number: 23865505.4
(22) Date of filing: 12.09.2023
(51) Int. Cl.: H01Q 1/24, H01Q 1/12, H01Q 21/06, H04B 7/06, H04B 7/08

(54) **ANTENNA DEVICE AND ANTENNA UNIT**

(30) Priority: 14.09.2022 JP 2022145922
(71) Applicant: AGC INC., Chiyoda-ku, Tokyo 1008405 (JP)
(72) Inventor: IKUMA Yoshiyuki, Tokyo 100-8405 (JP); SONODA Ryuta, Tokyo 100-8405 (JP); HIGASHIDA Yasushi, Tokyo 100-8405 (JP)
(74) Representative: Müller-Boré & Partner Patentanwälte PartG mbB
(86) International application number: PCT/JP2023/033117
(87) International publication number: WO 2024/058152

(57) **Abstract**

Provided is an antenna device that can be used in the quasi-millimeter wave band or millimeter wave band, and can suppress cracking of a window glass even when the antenna device is installed so as to face the window glass. The antenna device is configured to be connected to a digital control unit via a plurality of wires including a first wire and a second wire, the antenna device including: an array antenna; an analog beamformer; a frequency upconverter; and a frequency downconverter, wherein an intermediate-frequency signal that is input to the frequency upconverter is input from the digital control unit to the antenna device via the first wire, an intermediate-frequency signal that is output from the frequency downconverter is output to the digital control unit via the second wire, and a control signal for controlling the analog beamformer is input from the digital control unit to the antenna device.

## Description

### TECHNICAL FIELD

The present disclosure relates to an antenna device and an antenna unit.

### BACKGROUND ART

An antenna unit that is installed so as to face a window glass for a building is known (for example, see Patent Document 1). In recent years, there is demand for antennas for communication in the quasi-millimeter wave band (20 GHz to 30 GHz) and the millimeter wave band (30 GHz to 300 GHz).

### PRIOR ART DOCUMENTS

### PATENT DOCUMENTS

Patent Document 1: WO2019/026963

### DISCLOSURE OF INVENTION

### TECHNICAL PROBLEM

However, an antenna unit used in the quasi-millimeter wave band or the millimeter wave band may include a built-in digital control unit that generates a large amount of heat. In such a case, when the antenna unit is installed in the vicinity of a window glass so as to face the window glass, there is a risk that the window glass may crack due to heat.

The present disclosure provides an antenna device and an antenna unit that can be used in the quasi-millimeter wave band or the millimeter wave band and can suppress cracking of a window glass even when the antenna device is installed so as to face the window glass.

### SOLUTION TO PROBLEM

One aspect of the present disclosure provides
an antenna device configured to be connected to a digital control unit via a plurality of wires including a first wire and a second wire, the antenna device including:
an array antenna, an analog beamformer, a frequency upconverter, and a frequency downconverter, wherein
an intermediate-frequency signal that is input to the frequency upconverter is input from the digital control unit to the antenna device via the first wire,
an intermediate-frequency signal that is output from the frequency downconverter is output to the digital control unit via the second wire, and
a control signal for controlling the analog beamformer is input from the digital control unit to the antenna device.

One aspect of the present disclosure provides
an antenna device configured to be connected to a digital control unit via a plurality of wires including a first wire, a second wire, and a third wire, the antenna device including:
an array antenna, an analog beamformer, a frequency upconverter, and a frequency downconverter, wherein
an intermediate-frequency signal that is input to the frequency upconverter is input from the digital control unit to the antenna device via the first wire,
an intermediate-frequency signal that is output from the frequency downconverter is output to the digital control unit via the second wire, and
a control signal for controlling the analog beamformer is input from the digital control unit to the antenna device via the third wire.

Another aspect of the present disclosure provides an antenna unit including:
the antenna device;
a digital control unit spaced apart from the window glass; and
the plurality of wires.

Another aspect of the present disclosure provides an antenna unit including:
an antenna device;
a digital control unit spaced apart from a window glass that the antenna device faces; and
a plurality of wires, wherein
the antenna device is connected to the digital control unit via the plurality of wires including a first wire and a second wire,
the antenna device includes an array antenna and an analog beamformer,
an analog signal that is input to the analog beamformer is input from the digital control unit to the antenna device via the first wire,
an analog signal that is output from the analog beamformer is output to the digital control unit via the second wire,
a control signal for controlling the analog beamformer is input from the digital control unit to the antenna device, and
the first wire and the second wire are optical cables for conveying the analog signals.

### ADVANTAGEOUS EFFECTS OF INVENTION

According to the present disclosure, it is possible to provide an antenna device and an antenna unit that can be used in the quasi-millimeter wave band or the millimeter wave band and can suppress cracking of a window glass even when the antenna device is installed so as to face the window glass.

### BRIEF DESCRIPTION OF DRAWINGS

[Fig. 1] Fig. 1 is a diagram showing an example of the arrangement of an antenna unit according to an embodiment of the present invention.
[Fig. 2] Fig. 2 is a front view of an antenna device according to an embodiment of the present invention.
[Fig. 3] Fig. 3 is a cross-sectional view schematically showing an example in which the antenna device according to an embodiment of the present invention is installed on a window glass.
[Fig. 4] Fig. 4 is a block diagram showing an example of the configuration of an antenna unit 10 according to an embodiment of the present invention.

### DESCRIPTION OF EMBODIMENTS

The following describes an embodiment with reference to the drawings. Each member in the drawings may be shown in a scale different from the actual scale to facilitate understanding. In the present specification, a three-dimensional orthogonal coordinate system including three axial directions (an X-axis direction, a Y-axis direction, and a Z-axis direction) is used, and a width direction of a window glass is defined as the Y-axis direction, a thickness direction of the window glass is defined as the Z-axis direction, and a height direction of the window glass is defined as the X-axis direction. The direction upward from the bottom of the window glass is defined as a +X-axis direction, and the opposite direction is defined as a -X-axis direction. In the following description, the +X-axis direction may be referred to as an "upward direction" and the -X-axis direction may be referred to as a "downward direction".

The X-axis direction, the Y-axis direction, and the Z-axis direction are directions parallel to an X-axis, a Y-axis, and a Z-axis, respectively. The X-axis direction, the Y-axis direction, and the Z-axis direction are orthogonal to each other. An XY plane, a YZ plane, and a ZX plane respectively indicate an imaginary plane parallel to the X-axis direction and the Y-axis direction, an imaginary plane parallel to the Y-axis direction and the Z-axis direction, and an imaginary plane parallel to the Z-axis direction and the X-axis direction.

For example, the Y-axis direction and the Z-axis direction are substantially parallel to a direction (horizontal direction) parallel to a horizontal plane, and the X-axis direction is substantially parallel to a vertical direction perpendicular to the horizontal plane.

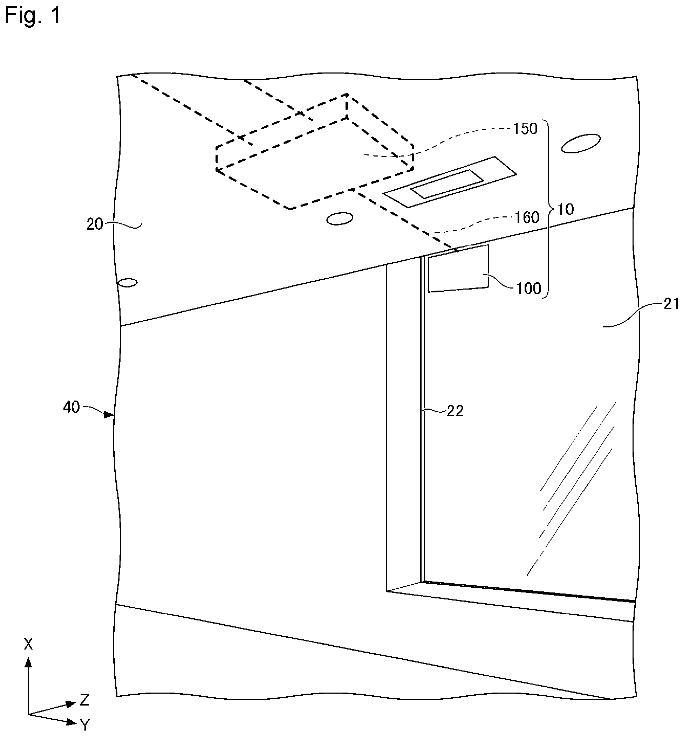

Fig. 1 is a diagram showing an example of the arrangement of an antenna unit 10 according to an embodiment of the present invention. The antenna unit 10 shown in Fig. 1 includes an antenna device 100, a digital control unit 150 spaced apart from a window glass 21, and a plurality of wires 160 connecting the antenna device 100 and the digital control unit 150. The antenna device 100 may be used by being installed so as to face an indoor side surface of the window glass 21 of a building 40.

The window glass 21 is a glass plate used for a window of a building, a vehicle, or the like. The window glass 21 has a rectangular shape as viewed from the front in the Z-axis direction, for example, and has a first glass surface and a second glass surface on the side opposite to the first glass surface. The thickness of the window glass 21 is set according to required specifications of the building or the like. The first glass surface or the second glass surface may be referred to as a main surface. In the present embodiment, a rectangular shape includes an oblong shape, a square shape, and a shape obtained by chamfering corners of an oblong or square shape. The shape of the window glass in a front view is not limited to a rectangular shape, and may be another shape such as a circular shape. The window glass 21 may be attached to a window frame 22 that holds an outer edge of the window glass 21.

The window glass 21 is not limited to a single plate. The window glass 21 may be laminated glass, double glazing, Low-E glass, dimming glass, or glass including a linear member. The Low-E glass is also called low-emissivity glass and may be a window glass having a coating layer (transparent conductive film) with a heat ray reflecting function on the indoor side surface. In the case where the window glass is double glazing, the air gap side surface of an indoor side glass pane may be coated with a transparent conductive film. In order to suppress deterioration of radio wave transmission performance, the coating layer may have an opening. The opening of the coating layer is preferably located at a position facing at least some of a plurality of radiating elements, which will be described later. The opening of the coating layer may be subjected to patterning. Patterning means, for example, leaving the coating layer in a grid pattern or removing the coating layer in a grid pattern. A configuration is also possible in which only a portion of the opening of the coating layer is subjected to patterning. The glass including a linear member includes a linear member made of metal or the like therein. The linear member may form a net-like pattern. The glass including a linear member is also called wired glass.

Examples of the material of the window glass 21 include soda lime silica glass, borosilicate glass, aluminosilicate glass, and non-alkali glass.

The thickness of the window glass 21 is preferably 1.0 to 20 mm. When the thickness of the window glass 21 is 1.0 mm or more, the window glass 21 has strength sufficient to attach the antenna device 100. When the thickness of the window glass 21 is 20 mm or less, the radio wave transmission performance is good. The thickness of the window glass 21 is more preferably 3.0 to 15 mm, and further preferably 6.0 to 12 mm.

In the example shown in Fig. 1, the antenna device 100 is used by being attached to the indoor sider surface of the window glass 21 for a building so as to face the indoor side surface. The antenna device 100 transmits and receives, through the window glass 21, radio waves in the quasi-millimeter wave band (20 GHz to 30 GHz), the millimeter wave band (30 GHz to 300 GHz), or a band from 7 GHz to 25 GHz, which is considered to be a main frequency band of the sixth generation mobile communication system (so-called 6G), for example. The antenna device 100 is configured to be capable of transmitting and receiving radio waves corresponding to wireless communication standards for the fifth generation mobile communication system (so-called 5G) or 6G, or wireless LAN (Local Area Network) standards such as IEEE 802.11ax or IEEE 802.11ay, for example. The antenna device 100 may be configured to be capable of transmitting and receiving electromagnetic waves corresponding to other standards or electromagnetic waves having a plurality of different frequencies. The antenna device 100 can be used as a radio communication base station that is used in the state of facing the window glass 21, for example.

The antenna device 100 shown in Fig. 1 faces the window glass 21 attached to the building 40, and accordingly, can emit a beam from a relatively low position toward the ground. Therefore, the antenna device 100 can build a communication network area in which a relatively high throughput can be obtained between the antenna device 100 and the ground. Furthermore, the antenna device 100 faces the window glass 21 attached to the building 40, and accordingly, it is easy to emit a beam while avoiding obstacles between the antenna device 100 and the ground. Therefore, the antenna device 100 can build a communication network area in which a relatively high throughput can be obtained between the antenna device 100 and the ground.

In the example shown in Fig. 1, the antenna device 100 is installed on the indoor side of the window glass 21 of the building 40. Therefore, installation of the antenna device 100 can be performed indoors, facilitating the task of the installation.

The plurality of wires 160 may include a plurality of types of wires. Specific examples of the wires 160 include coaxial cables, optical cables (also called "optical fiber cables"), differential transmission cables, Ethernet cables, and flexible printed circuit boards. The antenna device 100 is connected to the digital control unit 150 via the plurality of wires 160. The digital control unit 150 performs communication control and consumes as much as several hundreds of watts of power, and accordingly, generates a large amount of heat. For example, the digital control unit 150 generates more heat than the antenna device 100. The digital control unit 150 is spaced apart from the window glass 21. The digital control unit 150 is installed behind a ceiling 20 so as to be hidden by the ceiling 20 in the example shown in Fig. 1. The digital control unit 150 may be installed on a wall or a floor, or behind the wall or under the floor. If the digital control unit 150 is disposed behind the ceiling 20, behind the wall, or under the floor, for example, the digital control unit 150 is not conspicuous, which is good in terms of design.

The position at which the digital control unit 150 is disposed is preferably set such that heat generated from the digital control unit 150 is not conducted to the window glass 21, and is preferably spaced apart from the window glass by 100 mm or more. The distance between the digital control unit 150 and the window glass 21 is preferably 300 mm or more, more preferably 1000 mm or more, and still more preferably 2000 mm or more. The distance between the digital control unit 150 and the window glass 21 may be 20 m or more, or 30 m or more. The distance between the digital control unit 150 and the window glass 21 may be 5000 mm or more. The upper limit of the distance between the digital control unit 150 and the window glass 21 is not particularly limited, but is preferably 100 m or less, more preferably 50 m or less, still more preferably 40 m or less, and particularly preferably 10000 mm or less in order to suppress a reduction in losses due to the wires 160.

The length of each wire 160 is preferably 100 mm or more, more preferably 300 mm or more, still more preferably 1000 mm or more, and particularly preferably 2000 mm or more. The length of each wire 160 may be 20 m or more, or 30 m or more. When the length of each wire 160 is 100 mm or more, heat generated from the digital control unit 150 is hardly conducted to the window glass 21. The upper limit of the length of each wire 160 is not particularly limited, but is preferably 100 m or less, more preferably 50 m or less, and still more preferably 40 m or less in order to suppress a reduction in losses due to the wires 160.

The digital control unit 150 may be connected to a communication network (not shown) via a wire such as an optical cable. The digital control unit 150 is connected to a distributed unit, a central unit, or the like in the case of 5G, for example, and further connected to a 5G core network.

In the case where the window glass 21 is attached to the window frame 22, the antenna device 100 is preferably installed at a position spaced apart from an inner frame of the window frame 22 by 20 mm or more. When the antenna device 100 is spaced apart from the window frame 22 by 20 mm or more, a temperature gradient between a portion of the window glass 21 facing the antenna device 100 and a portion of the window glass 21 located within the window frame 22 can be made gentle. Thus, a thermal strain generated in the window glass 21 can be reduced, and therefore the window glass 21 is unlikely to crack. Moreover, when the antenna device 100 is spaced apart from the inner frame of the window frame 22 by 20 mm or more, it is easy to install the antenna device 100.

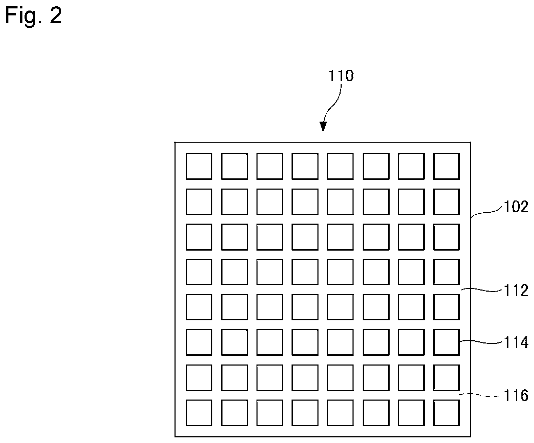

Fig. 2 is a front view of the antenna device 100 according to an embodiment of the present invention. The antenna device 100 includes an antenna aperture 102.

The antenna device 100 shown in Fig. 2 is a planar antenna including at least one array antenna 110. The array antenna 110 is, for example, a microstrip array antenna including a substrate 112 between a plurality of radiating elements 114 arranged in a plane and a conductor 116. The plurality of radiating elements 114 are included in the antenna aperture 102 in a front view. The number of radiating elements 114 constituting the array antenna 110 is preferably 16 or more, and more preferably 32 or more, in order to perform massive MIMO communication. When the array antenna 110 has optical transparency, the array antenna can secure a field of view through a window glass when the array antenna is installed so as to face the window glass. The array antenna 110 may be a slot array antenna.

The radiating elements 114 shown in Fig. 2 are antenna conductors formed to be capable of transmitting and receiving radio waves in a desired frequency band. Examples of the desired frequency band include the quasi-millimeter wave band corresponding to frequencies from 20 to 30 GHz and the millimeter wave band corresponding to frequencies from 30 to 300 GHz. The radiating elements 114 function as emitters (radiators).

The radiating elements 114 are provided on a first main surface, which is an outdoor side surface of the substrate 112. The radiating elements 114 may be formed by applying a metallic material to the first main surface of the substrate 112.

The radiating elements 114 are conductors formed into a flat shape, for example. As a metallic material of the radiating elements 114, it is possible to use a conductive material such as gold, silver, copper, aluminum, chromium, lead, zinc, nickel, or platinum. The conductive material may be an alloy, such as an alloy of copper and zinc (brass), an alloy of silver and copper, or an alloy of silver and aluminum. The radiating elements 114 may be thin films. The shape of the radiating elements 114 may be a rectangular shape or a circular shape, but is not limited to these shapes. The radiating elements 114 may have a line shape like a dipole antenna or a plate shape.

Examples of other materials that can be used for forming the radiating elements 114 include fluorine-doped tin oxide (FTO) and indium tin oxide (ITO).

In the present embodiment, the radiating elements 114 are provided on the first main surface of the substrate 112, but the radiating elements 114 may also be provided inside the substrate 112. In this case, the radiating elements 114 may be formed into a coil shape, for example, and provided inside the substrate 112.

In the case where the substrate 112 is laminated glass including a pair of glass plates and a resin layer between the pair of glass plates, the radiating elements 114 may be provided between the glass plate constituting the laminated glass and the resin layer.

Alternatively, as for the radiating elements 114, the radiating elements 114 themselves may be formed into a flat plate shape. In this case, the flat plate-shaped radiating elements 114 may be directly attached to a support section without the substrate 112 being used.

The radiating elements 114 may also be provided inside a casing rather than being provided on the substrate 112. In this case, the radiating elements 114 may be provided inside the casing, with the radiating elements 114 being flat plate-shaped, for example. The shape of the casing is not particularly limited, and may be a rectangular shape. The substrate 112 may be a portion of the casing.

The radiating elements 114 may have optical transparency. When the radiating elements 114 have optical transparency, not only the design of the antenna device 100 can be improved but an average solar absorptance of the antenna device 100 can be reduced. In this case, the visible light transmittance of the radiating elements 114 is preferably 40% or more, and preferably 60% or more in terms of maintaining functions of the window glass by securing transparency. The visible light transmittance can be determined in accordance with JIS R 3106:1998.

The radiating elements 114 may be formed into a mesh pattern to have the optical transparency. The mesh pattern refers to a state in which light permeable holes are formed like a net in the plane of the radiating elements 114.

In the case where the radiating elements 114 are formed into a mesh pattern, the meshes may have a rectangular shape, a rhombic shape, or a polygonal shape. The mesh line width is preferably 0.1 to 30 µm, and more preferably 0.2 to 15 µm. The mesh line spacing is preferably 5 to 500 µm, and more preferably 10 to 300 µm.

An numerical aperture ratio of the radiating elements 114 is preferably 80% or more, and more preferably 90% or more. The numerical aperture ratio of the radiating elements 114 is the percentage of the area of openings formed in the radiating elements 114 to the total area of the radiating elements 114 including the openings. The higher the numerical aperture ratio of the radiating elements 114 is, the higher the visible light transmittance of the radiating elements 114 can be.

In the case where the radiating elements 114 are conductors formed on a plane, for example, the thickness of the radiating elements 114 is preferably equal to or larger than a skin depth thereof. For example, the thickness is preferably 1 µm or more, and more preferably 10 µm or more for the quasi-millimeter wave band corresponding to frequencies from 20 to 30 GHz. The upper limit of the thickness of the radiating elements 114 is not particularly limited, but may be 5 µm or less, 10 µm or less, or 40 µm or less in order to maintain the dimensional accuracy of the conductors in a preferable range.

In the case where the radiating elements 114 are formed into a mesh pattern, the thickness of the radiating elements 114 may be 1 to 40 µm. When the radiating elements 114 are formed into a mesh pattern, a high visible light transmittance can be obtained even if the radiating elements 114 are thick.

The substrate 112 is a board disposed in parallel with the window glass, for example. The substrate 112 has a rectangular shape in a plan view, for example, and has the first main surface and a second main surface. The first main surface of the substrate 112 faces the outdoor side, and in a first embodiment, faces the indoor side surface of the window glass. The second main surface of the substrate 112 faces the indoor side, and in the first embodiment, faces the same direction as the indoor side surface of the window glass.

The substrate 112 may also be disposed in such a manner as to form a predetermined angle with respect to the window glass. The antenna device 100 may radiate electromagnetic waves in a state where (the normal direction of) the substrate 112 on which the radiating elements 114 are provided is inclined with respect to (the normal direction of) the window glass.

The material of the substrate 112 is designed according to antenna performance such as the power and directivity required for the radiating elements 114, and a dielectric material such as glass or resin can be used, for example. The substrate 112 may be formed of a dielectric material such as glass or resin to have optical transparency. When the substrate 112 is formed of a material having the optical transparency, the substrate 112 can be kept from blocking a field of view seen through the window glass.

When a glass plate is used as the substrate 112, examples of the material of the glass include soda lime silica glass, borosilicate glass, aluminosilicate glass, quartz glass, and non-alkali glass.

The glass plate used as the substrate 112 can be manufactured using a known manufacturing method such as a float method, a fusion method, a redraw method, a press forming method, or a pulling method. The float method is preferably used as the manufacturing method of the glass plate from the viewpoint of excellent productivity and cost.

The glass plate is formed into a rectangular shape in a plan view. The glass plate can be cut by irradiating a surface of the glass plate with a laser beam and moving the irradiation region of the laser beam on the surface of the glass plate, or by mechanically cutting the glass plate using a cutter wheel or the like, for example.

In the present embodiment, a rectangular shape includes an oblong shape, a square shape, and a shape obtained by rounding corners of an oblong or square shape. The shape of the glass plate in a plan view is not limited to a rectangular shape, and may be a circular shape or the like. The glass plate is not limited to a single plate, and may be laminated glass or double glazing.

When resin is used for the substrate 112, examples of the resin include a liquid crystal polymer (LCP), polyphenylene ether (PPE), polycarbonate, and fluororesins. Fluororesins are preferable because of their low dielectric constant and low dielectric loss.

Examples of the fluororesins include ethylene/tetrafluoroethylene-based copolymer (hereinafter also referred to as "ETFE"), hexafluoropropylene/tetrafluoroethylene-based copolymer (hereinafter also referred to as "FEP"), tetrafluoroethylene/propylene copolymer, tetrafluoroethylene/hexafluoropropylene/propylene copolymer, perfluoro(alkylvinylether)/tetrafluoroethylene-based copolymer (hereinafter also referred to as "PFA"), tetrafluoroethylene/hexafluoropropylene/vinylidene fluoride-based copolymer (hereinafter also referred to as "THV"), polyvinylidene fluoride (hereinafter also referred to as "PVDF"), vinylidene fluoride/hexafluoropropylene-based copolymer, polyvinyl fluoride, chlorotrifluoroethylene-based polymer, ethylene/chlorotrifluoroethylene-based copolymer (hereinafter also referred to as "ECTFE"), and polytetrafluoroethylene. Any one thereof may be used alone, or two or more thereof may be used in combination.

At least one selected from the group consisting of ETFE, FEP, PFA, PVDF, ECTFE, and THV is preferably used as a fluororesin. Among these, ETFE is particularly preferable because of its excellent transparency, processability, and weather resistance.

The substrate 112 preferably has a thickness h of 25 µm to 10 mm. The thickness h of the substrate 112 can be designed according to the relative dielectric constant of the substrate 112, the frequency band to be used, and the required bandwidth.

In the case where the substrate 112 is made of resin, it is preferable to use a film or sheet of the resin. The thickness h of the film or sheet is preferably 25 to 1000 µm, and more preferably 50 to 800 µm from the viewpoint of achieving excellent strength for holding the antenna.

In the case where the substrate 112 is made of glass, the thickness h of the substrate 112 is preferably 0.5 to 10 mm from the viewpoint of the strength for holding the antenna.

The first main surface of the substrate 112, which is the outdoor side surface, preferably has an arithmetic mean roughness Ra of 1.2 µm or less. This is because when the arithmetic mean roughness Ra of the first main surface is 1.2 µm or less, an airflow is facilitated in a space formed between the substrate 112 and the window glass. The arithmetic mean roughness Ra of the first main surface is more preferably 0.6 µm or less, and still more preferably 0.3 µm or less. The lower limit of the arithmetic mean roughness Ra is not particularly limited, but is 0.001 µm or more, for example.

The arithmetic mean roughness Ra can be measured based on the Japanese industrial standard JIS B0601:2001.

The substrate 112 preferably has an area of 0.001 to 4 m². When the area of the substrate 112 is 0.001 m² or more, the radiating elements 114, the conductor 116, and the like can be easily formed. When the area of the substrate 112 is 4 m² or less, the antenna unit is less conspicuous in the appearance, which is good in terms of design. The area of the substrate 112 is more preferably 0.05 to 2 m².

The conductor 116 may be provided on the second main surface of the substrate 112 on the side opposite to the window glass. The conductor 116 is provided on the indoor side with respect to the radiating elements 114. The conductor 116 may be a portion that functions as an electromagnetic shielding layer capable of reducing electromagnetic wave interference between electromagnetic waves radiated from the radiating elements 114 and electromagnetic waves generated from an electronic device in the room. The conductor 116 may be a single layer or may include a plurality of layers. A known material such as a metal film of copper, tungsten, or the like, or a transparent substrate constituted by a transparent conductive film may be used as the conductor 116.

As the transparent conductive film, it is possible to use a translucent conductive material such as indium tin oxide (ITO), fluorine-doped tin oxide (FTO), indium zinc oxide (IZO), silicon-oxide-doped indium tin oxide (ITSO), zinc oxide (ZnO), or a Si compound containing P (phosphorus) or B (boron), for example.

The conductor 116 is a conductor plane formed into a flat shape, for example. The shape of the conductor 116 may be a rectangular shape or a circular shape, but is not limited to these shapes.

The conductor 116 may be formed into a mesh pattern to have optical transparency. Here, the mesh pattern refers to a state in which light permeable holes are formed like a net in the plane of the conductor 116. In the case where the conductor 116 is formed into a mesh pattern, the meshes may have a rectangular shape, a rhombic shape, or a polygonal shape. The mesh line width is preferably 0.1 to 30 µm, and more preferably 0.2 to 15 µm. The mesh line spacing is preferably 5 to 500 µm, and more preferably 10 to 300 µm.

The conductor 116 can be formed by a known method, such as sputtering or vapor deposition.

The surface resistivity of the conductor 116 is preferably 20 Ω/sq or less, more preferably 10 Ω/sq or less, and still more preferably 5 Ω/sq or less. The conductor 116 is preferably larger than the substrate 112, but may be smaller than the substrate 112. It is possible to suppress transmission of radio waves into the room by providing the conductor 116 on the second main surface side of the substrate 112, which is the indoor side. The surface resistivity of the conductor 116 may be set according to the thickness, material, and numerical aperture ratio of the conductor 116. The numerical aperture ratio is the percentage of the area of openings formed in the conductor 116 to the total area of the conductor 116 including the openings.

The visible light transmittance of the conductor 116 is preferably 40% or more, and more preferably 60% or more in terms of improving the design. The visible light transmittance of the conductor 116 is preferably 90% or less, and more preferably 80% or less in order to suppress transmission of radio waves into the room.

The higher the numerical aperture ratio of the conductor 116 is, the higher the visible light transmittance becomes. The numerical aperture ratio of the conductor 116 is preferably 80% or more, and more preferably 90% or more. The numerical aperture ratio of the conductor 116 is preferably 95% or less in order to suppress transmission of radio waves into the room.

In the case where the conductor 116 is a conductor formed on a plane, for example, the thickness of the conductor 116 is preferably equal to or larger than a skin depth thereof. For example, the thickness of the conductor 116 is preferably 1 µm or more, and more preferably 10 µm or more for the quasi-millimeter wave band corresponding to frequencies from 20 to 30 GHz. The upper limit of the thickness of the conductor 116 is not particularly limited, but may be 5 µm or less, 10 µm or less, or 40 µm or less in order to maintain the dimensional accuracy of the conductor in a preferable range.

In the case where the conductor 116 is formed into a mesh pattern, the thickness of the conductor 116 may be 1 to 40 µm. When the conductor 116 is formed into a mesh pattern, a high visible light transmittance can be obtained even if the conductor 116 is thick.

The illustrated radiating elements 114 are patch elements (patch antennas), but may be other elements such as dipole elements (dipole antennas), slot elements (slot antennas), or the like.

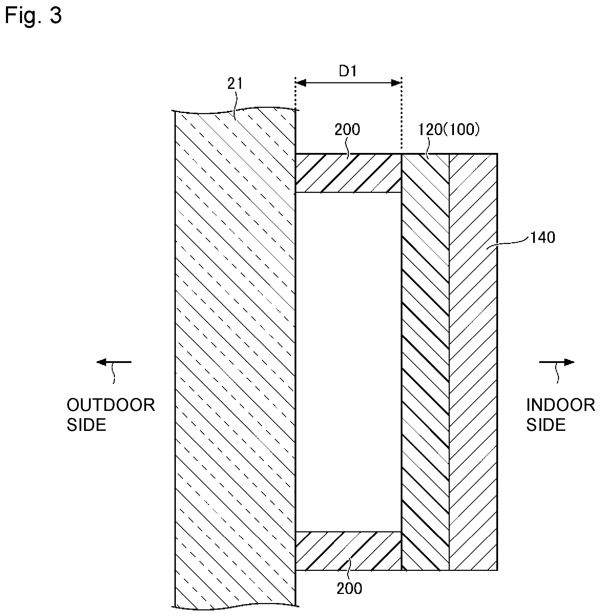

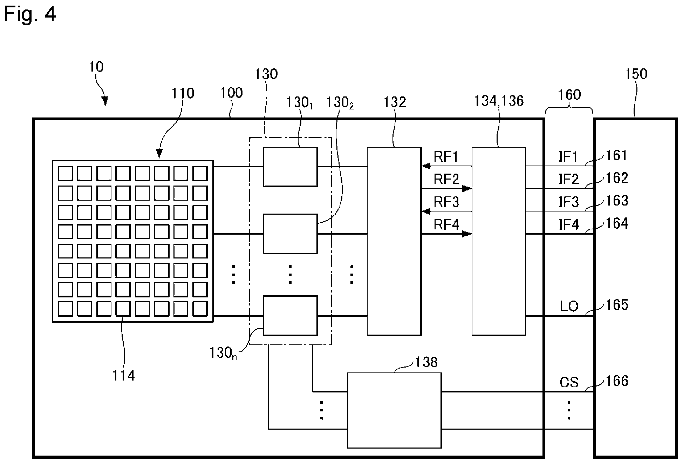

Fig. 3 is a cross-sectional view schematically showing an example in which the antenna device 100 according to an embodiment of the present invention is installed on the window glass 21. The antenna device 100 shown in Fig. 3 is installed so as to face the indoor side surface of the window glass 21 of the building 40. As shown in Fig. 4, the antenna device 100 includes the array antenna 110, an analog beamformer 130, a frequency upconverter 134, and a frequency downconverter 136. Details of the configuration shown in Fig. 4 will be described later.

In the example shown in Fig. 3, the array antenna 110, the analog beamformer 130, the frequency upconverter 134, and the frequency downconverter 136 are housed in a housing 120. That is, the antenna device 100 is housed in the housing 120.

The antenna device 100 may be fixed to the window glass 21. In the example shown in Fig. 3, the housing 120 in which the antenna device 100 is housed is fixed to the window glass 21 by fixing devices 200. The fixing devices 200 fix the antenna device 100 in such a manner that a space is formed between the window glass 21 and the antenna device 100. When there is a space between the window glass 21 and the antenna device 100, a convective flow is generated in the space by the stack effect, whereby heat dissipation from the antenna device 100, in particular the analog beamformer 130, can be facilitated and cracking of the window glass 21 due to heat can be prevented. The fixing devices 200 may be spacers that secure the space between the window glass 21 and the antenna device 100. The fixing devices 200 may be formed from a dielectric substrate. It is possible to use, as a material of the fixing devices 200, a known resin such as polycarbonate resin, polyphenylene ether resin, polybutylene terephthalate, ABS resin, silicone resin, polysulfide resin, or acrylic resin, for example. Alternatively, a metal such as aluminum may be used.

The antenna device 100 may be provided with a heat sink 140 for dissipating heat from the antenna device 100. The heat sink 140 can prevent overheating of the antenna device 100. In the example shown in Fig. 3, the heat sink 140 is in contact with the indoor side surface of the antenna device 100 so that heat can be conducted from the antenna device 100.

When a distance D1 from the antenna device 100, which faces the window glass 21, to the window glass 21 is 3 mm or more and 20 mm or less, it is possible to suppress cracking of the window glass 21 due to heat and realize transmission of radio waves through the window glass 21 at the same time, and the effectiveness of the installation of the antenna device 100 is enhanced. When the distance D1 is 3 mm or more, heat dissipation is enhanced, and accordingly, cracking of the window glass 21 due to heat is suppressed. When the distance D1 is 5 mm or more, heat dissipation from the antenna device 100 is further enhanced, and cracking of the window glass 21 is further suppressed. When the distance D1 is 20 mm or less, a reduction in the intensity of a beam radiatedthrough the window glass 21 can be suppressed. When the distance D1 is 8 mm or less, the reduction in the intensity of a beam radiated through the window glass 21 can be further suppressed. When λg represents a wavelength at an operating frequency of the radiating elements 114, the distance D1 may be 0.28 λg or more and 0.93 λg or less.

Note that the constituent elements in the housing 120 (for example, at least one of the analog beamformer 130, the frequency upconverter 134, and the frequency downconverter 136) may be disposed in a region that does not overlap the radiating elements 114 when the array antenna 110 is viewed from the front. This can improve the design.

Fig. 4 is a block diagram showing an example of the configuration of the antenna unit 10 according to an embodiment of the present invention.

The analog beamformer 130 is connected to the array antenna 110. The analog beamformer 130 conveys a transmission signal to the array antenna 110 and accepts a received signal from the array antenna 110. The analog beamformer 130 mainly performs amplification of the transmission signal and the received signal, phase adjustment of the transmission signal and the received signal, amplitude adjustment of the transmission signal and the received signal, and switching of the path of the transmission signal and the received signal. The analog beamformer 130 changes the amplitudes and phases of transmission signals and received signals applied to the plurality of radiating elements 114 in the array antenna 110 in accordance with a control signal CS for controlling the analog beamformer 130. By applying amplitude and phase changes to all the radiating elements 114 of the array antenna 110, beams can be directed at various angles. The analog beamformer 130 is supplied with power from a power source (not shown). The analog beamformer 130 may employ, for example, an electronic circuit or a liquid crystal.

The analog beamformer 130 may include n beamforming ICs (integrated circuits) that perform beamforming using the array antenna 110. n is an integer of 1 or more. Fig. 4 shows n beamforming ICs 130₁, 130₂, ..., and 130ₙ as an example. Each of the n beamforming ICs controls phase and amplitude of each of a plurality of transmission signals to be conveyed to each of a plurality of radiating elements 114 assigned to itself, in accordance with the control signal CS. Also, each of the n beamforming ICs controls phase and amplitude of each of a plurality of received signals accepted from each of the plurality of radiating elements 114 assigned to itself, in accordance with the control signal CS. Each of the n beamforming ICs includes a first phase shifter for adjusting the phase of a transmission signal, a first amplitude adjuster for adjusting the amplitude of the transmission signal, a second phase shifter for adjusting the phase of a received signal, and a second amplitude adjuster for adjusting the amplitude of the received signal. The first phase shifter and the second phase shifter may be the same phase shifter for both transmission signal and received signal, rather than being separate phase shifters. The first amplitude adjuster and the second amplitude adjuster may be the same amplitude adjuster for both transmission signal and received signal, rather than being separate amplitude adjusters. The amplitude adjuster may be an attenuator for attenuating the amplitude of a transmission signal or a received signal, a variable gain amplifier for increasing the amplitude of a transmission signal or a received signal, or a combination of an attenuator and a variable gain amplifier.

The analog beamformer 130 is connected to the frequency upconverter 134 and the frequency downconverter 136 via a power divider/combiner132. The power divider/combiner 132 functions as a power divider for transmitting a signal and as a power combiner device for receiving a signal. The power divider/combiner 132 distributes one or a plurality of transmission radio frequency signals output from the frequency upconverter 134 to the n beamforming ICs. Fig. 4 shows two transmission radio frequency signals RF1 and RF3 as an example. The power divider/combiner 132 composites a plurality of received radio frequency signals output from the n beamforming ICs, and outputs one or a plurality of composited received radio frequency signals to the frequency downconverter 136. Fig. 4 shows two received radio frequency signals RF2 and RF4 as an example. Note that radio frequency signals are also referred to as RF signals. RF is an abbreviation for Radio Frequency.

The frequency upconverter 134 is connected to the analog beamformer 130. In this example, the frequency upconverter 134 is connected to the n beamforming ICs in the analog beamformer 130 via the power divider/combiner 132. The frequency upconverter 134 mainly performs a function of generating a transmission radio frequency signal by performing frequency mixing of a transmission intermediate-frequency signal and a local oscillation signal. In the case shown in Fig. 4, the frequency upconverter 134 generates the transmission radio frequency signal RF1 by performing frequency mixing of a transmission intermediate-frequency signal IF1 and a local oscillation signal LO, and generates the transmission radio frequency signal RF3 by performing frequency mixing of a transmission intermediate-frequency signal IF3 and the local oscillation signal LO. Note that intermediate-frequency signals are also referred to as IF signals. IF is an abbreviation for Intermediate Frequency, and LO is an abbreviation for Local Oscillator.

The frequency (transmission RF frequency f_{RFT}) of the transmission radio frequency signals RF1 and RF3 is higher than the frequency (transmission IF frequency f_{IFT}) of the transmission intermediate-frequency signals IF1 and IF3. The frequency of the local oscillation signal LO is referred to as a local oscillation frequency f_{LO}. Then, when f_{RFT}>f_{LO}, the transmission RF frequency f_{RFT} is equal to the sum of the transmission IF frequency f_{IFT} and the local oscillation frequency f_{LO} (f_{RFT}=f_{IFT}+f_{LO}). On the other hand, when f_{RFT}<f_{LO}, the transmission RF frequency f_{RFT} is equal to the difference obtained by subtracting the transmission IF frequency f_{IFT} from the local oscillation frequency f_{LO} (f_{RFT}=f_{LO}-f_{IFT}).

The transmission IF frequency f_{IFT} is 12 GHz or less, for example. The transmission IF frequency f_{IFT} may be 8 GHz or less, or 6 GHz or less. The lower limit of the transmission IF frequency f_{IFT} is not particularly limited as long as the required bandwidth is secured, but is 500 MHz, for example.

The frequency downconverter 136 is connected to the analog beamformer 130. In this example, the frequency downconverter 136 is connected to the n beamforming ICs in the analog beamformer 130 via the power divider/combiner 132. The frequency downconverter 136 mainly performs a function of generating a received intermediate-frequency signal by performing frequency mixing of a received radio frequency signal and the local oscillation signal. In the case shown in Fig. 4, the frequency downconverter 136 generates a received intermediate-frequency signal IF2 by performing frequency mixing of the received radio frequency signal RF2 and the local oscillation signal LO, and generates a received intermediate-frequency signal IF4 by performing frequency mixing of the received radio frequency signal RF4 and the local oscillation signal LO.

The frequency (received IF frequency F_{IFR}) of the received intermediate-frequency signals IF2 and IF4 is lower than the frequency (received RF frequency f_{RFR}) of the received radio frequency signals. The frequency of the local oscillation signal LO is referred to as the local oscillation frequency f_{LO}. Then, when f_{RFR}>f_{LO}, the received IF frequency f_{IFR} is equal to the difference obtained by subtracting the local oscillation frequency f_{LO} from the received RF frequency f_{RFR} (f_{IFR}=f_{RFR}-f_{LO}). On the other hand, when f_{RFR}<f_{LO}, the received IF frequency f_{IFR} is equal to the difference obtained by subtracting the received RF frequency f_{RFR} from the local oscillation frequency f_{LO} (f_{IFR}=f_{LO-}f_{RFR}).

The received IF frequency f_{IFR} is 12 GHz or less, for example. The received IF frequency f_{IFR} may be 8 GHz or less, or 6 GHz or less. The lower limit of the received IF frequency f_{IFR} is not particularly limited as long as the required bandwidth is secured, but is 500 MHz, for example.

The frequency upconverter 134 and the frequency downconverter 136 perform frequency conversion between a high-frequency RF signal, such as a quasi-millimeter wave or a millimeter wave, and an intermediate-frequency IF signal, which is relatively easy to handle, thereby enabling exchange of signals with the digital control unit 150. In the quadrature modulation/demodulation method, a RF signal at the time of transmitting or receiving operation is modulated/demodulated into an I/Q signal, and the frequency upconverter 134 and the frequency downconverter 136 may be transceivers in which a frequency mixing unit is a direct I/Q quadrature modulator/demodulator as in this case.

Power is supplied to the frequency upconverter 134 and the frequency downconverter 136 from a power source (not shown). A wire for supplying the power may be provided as a stand-alone wiring. Alternatively, the power may be conveyed to the antenna device 100 by multiplexing on a wire, such as a coaxial cable, for conveying an intermediate-frequency signal or the local oscillation signal, which is an analog signal, with use of a choke coil or the like in the digital control unit 150, and separated from the intermediate-frequency signal or the local oscillation signal with use of a choke coil or the like in the antenna device 100. Alternatively, the power may be conveyed simultaneously with the control signal, which is a digital signal, through a wire for conveying the control signal, such as a flat cable, a differential transmission cable, or an Ethernet cable. For example, technologies for simultaneously supplying digital signal data and power through an Ethernet wire are well known as PoE (Power-over-Ethernet) standards. Furthermore, when a method of conveying power with use of an optical cable is used, an optical cable for supplying power may be provided as a stand-alone wiring, or the power may be conveyed simultaneously with an analog signal through wires 161 to 164 or optical cables serving as some of these wires, or the power may be supplied simultaneously with the control signal through a wire 165.

In the case shown in Fig. 4, a radio frequency signal obtained by receiving a first polarized wave (for example, a horizontally polarized wave) by the radiating elements 114 is converted into the received intermediate-frequency signal IF2 by the frequency downconverter 136, and conveyed to the digital control unit 150 via the wire 162. Likewise, a radio frequency signal obtained by receiving a second polarized wave (for example, a vertically polarized wave) by the radiating elements 114 is converted into the received intermediate-frequency signal IF4 by the frequency downconverter 136, and conveyed to the digital control unit 150 via the wire 164. Conversely, the transmission intermediate-frequency signal IF1 conveyed from the digital control unit 150 via the wire 161 for transmission of a first polarized wave is converted into a radio frequency signal by the frequency upconverter 134, and the first polarized wave is transmitted from the radiating elements 114. Likewise, the transmission intermediate-frequency signal IF3 conveyed from the digital control unit 150 via the wire 163 for transmission of a second polarized wave is converted into a radio frequency signal by the frequency upconverter 134, and the second polarized wave is transmitted from the radiating elements 114. The intermediate frequency may be a frequency similar to those in a frequency band (for example, 3.4 GHz to 3.6 GHz) used in the fourth generation mobile communication system (so-called 4G) or a frequency band (for example, 3.6 GHz to 4.6 GHz) that is called Sub6 in 5G, for example. When the intermediate frequency is 12 GHz or less, a transmission path loss that occurs in the wires 161, 162, 163, and 164 is not a serious disadvantage compared with cases where signals having a frequency in the quasi-millimeter wave band or the millimeter wave band are conveyed through these wires.

The antenna device 100 is separated from the digital control unit 150, which generates a large amount of heat, via the plurality of wires 160, and the antenna device 100 consumes as little as several tens of watts of power and generates a small amount of heat. Therefore, even if the antenna device 100 is installed so as to face the window glass 21, cracking of the window glass 21 is unlikely to occur.

The digital control unit 150 has a modulation and coding (MODCOD) function, a demodulation and decoding function, a digital beam forming function, a local oscillation signal generating function, and the like. The modulation and coding function and the demodulation and decoding function are functions for converting an analog intermediate-frequency (IF) signal into digital data and the opposite, that is, converting digital data into an analog intermediate-frequency (IF) signal. The intermediate-frequency signal (IF signal) may be an in-phase/quadrature-phase signal (I/Q signal). The digital beam forming function is a function for generating digital control data necessary to direct beams at various angles by applying changes in the amplitude and phase to all the radiating elements 114 of the array antenna 110. The local oscillation signal generating function is a function for generating a signal necessary for the frequency mixing for the frequency upconverter 134 and the frequency downconverter 136, or the modulation and demodulation functions.

A high-gain beam steering array is required for 5G or 6G quasi-millimeter to millimeter radio waves. The antenna unit 10 includes the plurality of wires 160 (in this example, the wires 161 to 166) for conveying signals that are input or output between the digital control unit 150 and the antenna device 100 so as to satisfy this array requirement.

The transmission intermediate-frequency signal IF1 to be input to the frequency upconverter 134 is input from the digital control unit 150 to the antenna device 100 via the wire 161. The transmission intermediate-frequency signal IF3 to be input to the frequency upconverter 134 is input from the digital control unit 150 to the antenna device 100 via the wire 163. The wires 161 and 163 are examples of a first wire.

The received intermediate-frequency signal IF2 output from the frequency downconverter 136 is output to the digital control unit 150 via the wire 162. The received intermediate-frequency signal IF4 output from the frequency downconverter 136 is output to the digital control unit 150 via the wire 164. The wires 162 and 164 are examples of a second wire.

The wires 161 and 163 and the wires 162 and 164 are wires for conveying the intermediate-frequency signals IF1 to IF4, which are analog signals, and these wires are preferably coaxial cables.

Alternatively, as an embodiment of conveying the intermediate-frequency signals IF1 to IF4, which are analog signals, a system using an analog RoF (Radio-over-Fiber) technology may be used. The analog RoF technology is a technology in which the intensity of an optical signal is modulated using an analog signal and an optical signal in the form of an analog signal is conveyed through optical fiber. When this system is used, the wires 161 and 163 and the wires 162 and 164 may be optical cables. Furthermore, it is also possible to reduce the number of wires 161 to 164 by providing a multiplexer in the digital control unit 150 to multiplex the intermediate-frequency signals IF1 to IF4 before conveying the signals and providing a demultiplexer in the antenna device 100 to separate the signals IF1 to IF4 after conveying the signals. There are multiplexing methods such as wavelength-division multiplexing and space-division multiplexing.

The control signal CS for controlling the analog beamformer 130 is input from the digital control unit 150 to the antenna device 100 via at least one wire 166. The wire 166 is an example of a third wire. The control signal CS is one or a plurality of signals for controlling the amplitude and phase of the analog beamformer 130. The control signal CS is a digital or analog control signal. For example, the control signal CS may include a command signal indicating respective target values of the amplitude and the phase, a clock signal serving as a reference for an operation timing of the analog beamformer 130, and the like.

The wire 166 is a wire for conveying the control signal CS, and may be an optical cable, a differential transmission cable, an Ethernet cable, a flexible printed circuit board, or the like. A configuration is also possible in which the wire 166 is not provided. In this case, the control signal CS may be subjected to digital modulation, and the modulated control signal CS may be multiplexed and conveyed via either the wire 161 or 163 or either the wire 162 or 164 for conveying the intermediate-frequency signals IF1 to IF4. It is also possible to perform digital demodulation after frequency division in the antenna device 100.

The antenna device 100 may also include an interface circuit 138 to which the control signal CS is input. The control signal CS may be input to the analog beamformer 130 via the interface circuit 138 or may be input to the analog beamformer 130 without going through the interface circuit 138. The interface circuit 138 may include a filter for attenuating noise superimposed on the control signal CS, for example. The interface circuit 138 may include a power supply circuit for generating a power supply voltage of the antenna device 100, and in this case, the wire 166 may include a power supply line or a ground line.

The local oscillation signal LO is input from the digital control unit 150 to the antenna device 100 via a wire 165. The wire 165 is an example of a fourth wire. The wire 165 may be a wire for transmitting, instead of the local oscillation signal LO, a reference oscillation signal having a frequency lower than that of the local oscillation signal LO from the digital control unit 150 to the antenna device 100. The frequency upconverter 134 and the frequency downconverter 136 may use the local oscillation signal LO input via the wire 165 as the local oscillation signal to be used for frequency mixing. Alternatively, the frequency upconverter 134 and the frequency downconverter 136 may use, as the local oscillation signal to be used for frequency mixing, a signal obtained by multiplying the frequency of the reference oscillation signal input via the wire 165 by an integer (a signal obtained by multiplying the frequency of the reference oscillation signal). Alternatively, the frequency upconverter 134 and the frequency downconverter 136 may use, as the local oscillation signal to be used for frequency mixing, a signal generated based on the frequency of the reference oscillation signal input via the wire 165 (a signal generated from the reference oscillation signal with use of a phase-locked oscillator PLO or the like, for example). The local oscillation signal LO and the reference oscillation signal are examples of a signal to be used for frequency mixing.

The local oscillation signal LO is an analog signal, and the wire 165 is preferably a coaxial cable or an optical cable using the analog RoF technology, similarly to the wires 161 and 163 and the wires 162 and 164.

The embodiment has been described above, however, the embodiment is presented as an example, and the present invention is not limited to the embodiment. The above-described embodiment can be implemented in various other forms, and various combinations, omissions, substitutions, changes, and the like can be made without departing from the gist of the invention. Those embodiments and variations thereof are included in the scope and gist of the invention, and are also included in the scope of the invention described in the claims and an equivalent scope thereof.

For example, the antenna device 100 need not be fixed to the window glass 21. The antenna device 100 may be suspended from the ceiling or fixed to a projection (e.g., a window frame or a window sash holding an outer edge of the window glass 21) existing around the window glass 21 such that the antenna device 100 is used by being installed so as to face the window glass 21. The antenna device 100 may be installed so as to be in contact with the window glass 21 or in close proximity to the window glass 21 without being in contact with the window glass 21.

There is no limitation to the case where the antenna device 100 is disposed on the indoor side of the building so as to face the indoor side surface of the window glass 21, and the antenna device 100 may also be disposed on the outdoor side of the building so as to face the outdoor side surface of the window glass 21.

Also, there is no limitation to the case where the antenna device 100 is used by being installed so as to face the indoor side surface of the window glass 21 of the building 40, and the antenna device 100 may also be used by being installed so as to face the indoor side surface of a window glass of a vehicle.

In the case where power is conveyed to the antenna device 100 with use of an optical cable, an optical cable for supplying power may be provided as a stand-alone wiring. Also, the antenna device 100 may be provided with an optical cable that is used as a single wire configured to serve as the wires 161 to 164. Alternatively, the antenna device 100 may be provided with an optical cable that is used as a single wire configured to serve as an optical cable for supplying power and the wires 161 to 164. Alternatively, the antenna device 100 may be provided with an optical cable that is used as a single wire configured to serve as the wires 161 to 164 and 165, or the single wire may also serve as an optical cable for supplying power and power may be conveyed simultaneously with an analog signal and a control signal.

Alternatively, between the antenna device 100 and the digital control unit 150, using the analog RoF technology, an optical signal may be light strength modulated with an analog signal having a RF frequency e.g. in the millimeter wave band, and the optical signal in the form of an analog signal may be conveyed through optical fiber. In this case, it is unnecessary to perform frequency conversion between an RF frequency and an IF frequency, and therefore, the frequency upconverter 134 and the frequency downconverter 136 may be omitted. In the case where the frequency upconverter 134 and the frequency downconverter 136 are not provided, a transmission signal conveyed from the digital control unit 150 as an optical signal in the form of an analog signal is converted into an analog electrical signal having a RF frequency by the antenna device 100, and then output from the power diver 132 and the analog beamformer 130 to the array antenna 110. Also, a received signal received by the array antenna 110 is output from the analog beamformer 130 to the power combiner 132, and then converted from an analog electrical signal having a RF frequency to an optical signal in the form of an analog signal by the antenna device 100, and conveyed to the digital control unit 150. In this manner, the conveyance of an analog signal between the digital control unit 150 and the antenna device 100 may be performed by directly converting an analog signal having a RF frequency e.g. in the millimeter wave band into an optical signal.

The transmitted signal is converted by a photoelectric converter from an optical signal in the form of an analog signal to an analog electrical signal having a RF frequency, or conversely, from an analog electrical signal having a RF frequency to an optical signal in the form of an analog signal. The wires 161 and 163 and the wires 162 and 164 need to be optical cables for conveying optical signals in the form of analog signals. The number of wires 161 to 164 may be reduced by using a multiplexing technology such as wavelength-division multiplexing or space-division multiplexing, or the wires 161 to 164 may be configured as a single wire by using one optical cable. Provision of the third wire is optional. The control signal CS may be conveyed by the wire 166, or may be subjected to digital modulation and multiplexed and conveyed via either the wire 161 or 163 or either the wire 162 or 164. In the case where the control signal CS is conveyed by the wire 166, the wire 166 may be an optical cable, a flat cable, a differential transmission cable, an Ethernet cable, or the like.

The entire contents of the specification, claims, drawings, and abstract of Japanese Patent Application No. 2022-145922 filed on September 14, 2022 are hereby incorporated by reference as the disclosure of the specification of the present invention.

### REFERENCE SYMBOLS

- 10: Antenna unit
- 20: Ceiling
- 21: Window glass
- 22: Window frame
- 40: Building
- 100: Antenna device
- 102: Antenna aperture
- 110: Array antenna
- 112: Substrate
- 114: Radiating element
- 116: Conductor
- 120: Housing
- 130: Analog beamformer
- 130₁, 130₂, ..., 130ₙ: Beamforming IC
- 132: Power divider/combiner
- 134: Frequency upconverter
- 136: Frequency downconverter
- 138: Interface circuit
- 140: Heat sink
- 150: Digital control unit
- 160: Wire
- 200: Fixing device

## Claims

1. An antenna device configured to be connected to a digital control unit via a plurality of wires including a first wire and a second wire, the antenna device comprising:
an array antenna;
an analog beamformer;
a frequency upconverter; and
a frequency downconverter, wherein
an intermediate-frequency signal that is input to the frequency upconverter is input from the digital control unit to the antenna device via the first wire,
an intermediate-frequency signal that is output from the frequency downconverter is output to the digital control unit via the second wire, and
a control signal for controlling the analog beamformer is input from the digital control unit to the antenna device.

2. The antenna device according to Claim 1, wherein
the plurality of wires include a third wire, and
the control signal for controlling the analog beamformer is input from the digital control unit to the antenna device via the third wire.

3. The antenna device according to Claim 1, wherein
the control signal is conveyed by multiplexing on the first wire or the second wire for conveying the intermediate-frequency signal.

4. The antenna device according to Claim 1, wherein
the plurality of wires include a fourth wire, and
a signal to be used for frequency mixing is input from the digital control unit to the antenna device via the fourth wire.

5. The antenna device according to Claim 1, wherein
the intermediate-frequency signal has a frequency of 12 GHz or less.

6. An antenna unit comprising:
the antenna device as defined in any one of Claims 1 to 5;
a digital control unit spaced apart from a window glass that the antenna device faces; and
the plurality of wires.

7. The antenna unit according to Claim 6, wherein
the first wire and the second wire are coaxial cables.

8. The antenna unit according to Claim 6, wherein
the first wire and the second wire are optical cables for conveying analog signals.

9. The antenna unit according to Claim 6, wherein
the antenna device is used as a radio communication base station.

10. The antenna unit according to Claim 6, wherein
the antenna device faces the window glass attached to a building.

11. The antenna unit according to Claim 6, wherein
the antenna device facing the window glass is spaced apart from the window glass by a distance of 3 mm or more and 20 mm or less.

12. The antenna unit according to Claim 6, wherein
the antenna device is fixed to the window glass.

13. The antenna unit according to Claim 6, wherein
the window glass is attached to a window frame, and
the antenna device is installed at a position spaced apart from the window frame by 20 mm or more.

14. The antenna unit according to Claim 6, wherein
the plurality of wires each have a length of 100 mm or more and 100 m or less.

15. The antenna unit according to Claim 6, wherein
the digital control unit is spaced apart from the window glass by a distance of 100 mm or more and 100 m or less.

16. An antenna unit comprising:
an antenna device;
a digital control unit spaced apart from a window glass that the antenna device faces; and
a wire, wherein
the antenna device is connected to the digital control unit via the wire,
the antenna device includes an array antenna and an analog beamformer,
an analog signal that is input to the analog beamformer is input from the digital control unit to the antenna device via the wire,
an analog signal that is output from the analog beamformer is output to the digital control unit via the wire,
a control signal for controlling the analog beamformer is input from the digital control unit to the antenna device, and
the wire is an optical cable for conveying the analog signals.

17. The antenna unit according to Claim 16, wherein
the wire has a length of 100 mm or more and 100 m or less.

18. The antenna unit according to Claim 16, wherein
the digital control unit is spaced apart from the window glass by a distance of 100 mm or more and 100 m or less.

19. The antenna unit according to Claim 16, wherein
the antenna device faces the window glass attached to a building.

20. The antenna unit according to Claim 16, wherein
the antenna device facing the window glass is spaced apart from the window glass by a distance of 3 mm or more and 20 mm or less.

21. The antenna unit according to Claim 16, wherein
the antenna device is fixed to the window glass.

22. The antenna unit according to Claim 16, wherein
the window glass is attached to a window frame, and
the antenna device is installed at a position spaced apart from the window frame by 20 mm or more.
